# FASCICULE DE BREVET EUROPEEN

(11) **EP 3 133 565 B1**
(45) Date de publication et mention de la délivrance du brevet: **11.11.2020**
(21) Numéro de dépôt: 16184105.1
(22) Date de dépôt: 12.08.2016
(51) Int. Cl.: G07G 5/00, G07B 5/02, B41J 11/66

(54) **DÉCOUPEUR PAPIER POUR IMPRIMANTE INTÉGRÉE À UN DISPOSITIF ÉLECTRONIQUE ET DISPOSITIF ÉLECTRONIQUE CORRESPONDANT**
PAPIERABSCHNEIDER FÜR DRUCKER, DER IN EINE ELEKTRONISCHE VORRICHTUNG INTEGRIERT IST, UND ENTSPRECHENDE ELEKTRONISCHE VORRICHTUNG
PAPER CUTTER FOR A PRINTER BUILT INTO AN ELECTRONIC DEVICE AND CORRESPONDING ELECTRONIC DEVICE

(30) Priorité: 18.08.2015 FR 1557778
(43) Date de publication de la demande: 22.02.2017
(73) Titulaire: Ingenico Group, 75015 Paris (FR)
(72) Inventeur: JANOT, Cyril, 26400 GRANE (FR)
(74) Mandataire: Vidon Brevets & Stratégie

(56) Documents cités:
- DE-A1- 4 226 907
- FR-A1- 2 517 852
- JP-A- 2004 098 410
- US-A- 3 901 372
- US-A- 5 727 889
- US-A- 5 795 643
- Anonymous: "Total external reflection - Wikipedia", , 18 septembre 2014 (2014-09-18), XP55327084, Extrait de l'Internet: URL:https://en.wikipedia.org/w/index.php?t itle=Total_external_reflection&oldid=62606 8526 [extrait le 2016-12-07]

## Description

### 1 DOMAINE DE L'INVENTION

La présente invention se rapporte au domaine des terminaux de paiement électronique et des caisses enregistreuses électroniques et plus particulièrement à leur fonctionnalité d'impression d'un ticket.

### 2 SOLUTIONS DE L'ART ANTERIEUR

L'impression d'un ticket dans un dispositif électronique, tel qu'un terminal de paiement électronique ou une caisse enregistreuse, est mise en œuvre par une imprimante intégrée dans le boitier du dispositif électronique et ne permet pas de lire les lignes avant que le ticket ne sorte du dispositif. En effet, l'intégration de l'imprimante dans le dispositif électronique est mise en œuvre de façon à préserver l'aspect extérieur du dispositif et est donc le plus souvent cachée à la vue des utilisateurs du dispositif électronique. De plus, un élément permettant de découper le papier lorsque l'impression du ticket est terminée, appelé découpeur papier, doit être prévu et est le plus souvent conçu dans une matière métallique, afin d'éviter une usure trop rapide et ainsi assurer une robustesse optimale du découpeur papier.

Or, certaines utilisations spécifiques d'un terminal de paiement électronique (comme par exemple la fonctionnalité du type caisse enregistreuse) ou d'une caisse enregistreuse peuvent être optimisées par la visualisation (par le commerçant) des lignes imprimées avant que le ticket ne sorte du terminal de paiement électronique (par exemple afin de vérifier les données scannées d'un achat par exemple). Dans ce cas, le commerçant doit actuellement faire avancer le papier du ticket pour visualiser la ligne imprimée en dehors du terminal.

Un premier inconvénient de cette solution réside dans une surconsommation de papier, due aux avances de papier répétées (environ 7 millimètres de papier perdus à chaque avance du ticket).

Un deuxième inconvénient tient à la dégradation de la qualité du service offert au client, due au ralentissement de l'utilisation du dispositif électronique engendré par des avances de papier répétées.

Il existe donc un besoin pour une nouvelle technique d'impression d'un ticket dans un dispositif électronique (du type terminal de paiement électronique ou caisse enregistreuse), permettant d'optimiser, pour le commerçant, la lecture de la ligne venant d'être imprimée sur le ticket tout en garantissant la robustesse du dispositif électronique et la qualité de service offerte au client.

Le document JP2004098410A décrit un planimètre comprenant une imprimante et un découpeur papier transparent.

Le document US3901372A décrit un capot de protection pour imprimante comprenant une fenêtre de visualisation.

### 3 RESUME DE L'INVENTION

L'invention propose une solution nouvelle selon la revendication 1 qui ne présente pas l'ensemble de ces inconvénients de l'art antérieur.

Selon les différents modes de réalisation de l'invention, le découpeur papier est transparent et est adapté pour obtenir au moins les propriétés optiques suivantes :
- un rayon arrivant selon un premier angle de visualisation est au moins en partie réfracté pour arriver sur le papier et
- un rayon arrivant selon un deuxième angle de visualisation est totalement réfléchi.

Ainsi, l'invention propose, selon ses différents modes de réalisation, une solution nouvelle et inventive d'impression d'un ticket dans un dispositif électronique (tel qu'un terminal de paiement électronique ou une caisse enregistreuse) permettant à la fois la lecture du ticket imprimé avant qu'il ne sorte du dispositif (au moins la dernière ligne imprimée), pour le commerçant placé face au ticket, tout en empêchant la visibilité (par réflexion totale sur la surface du découpeur) pour une personne placée selon un autre angle de visualisation du ticket, comme par exemple un client.

Pour ce faire, l'invention, selon ses différents modes de réalisation, prévoit de rendre transparent le découpeur papier associé à l'imprimante, et de lui conférer des propriétés optiques particulières permettant une visibilité différente selon différents angles de visualisation.

Ainsi, dans le cas où l'imprimante est intégrée à un terminal de paiement électronique, ou une caisse enregistreuse, le découpeur papier selon les différents modes de réalisation de l'invention, est transparent pour le commerçant placé face au ticket, lui permettant de voir au travers, avant que le ticket ne sorte du terminal de paiement électronique (ou de la caisse enregistreuse,) au moins la dernière ligne imprimée (voire les deux dernières lignes, selon la hauteur du découpeur). En revanche, le découpeur papier, selon les différents modes de réalisation de l'invention, ne permet pas à un utilisateur (par exemple un client) placé selon un autre angle de visualisation de voir au travers.

L'invention permet ainsi, selon ses différents modes de réalisation, de contrôler la transparence du découpeur papier, selon l'angle de visualisation, de façon à permettre la lecture du ticket pour le commerçant tout en occultant la visibilité du ticket, et de l'intérieur du dispositif électronique pour le client.

Selon un aspect particulier de l'invention, le découpeur papier présente une forme adaptée pour obtenir ces propriétés optiques.

Ainsi, selon ce mode de réalisation particulier de l'invention, c'est la forme spécifique du découpeur papier qui permet d'obtenir les propriétés optiques souhaitées, en permettant une réflexion totale pour un angle de visualisation correspondant à un client alors qu'elle permet une transparence du découpeur pour un angle de visualisation correspondant à un commerçant face au ticket en cours d'impression.

Le découpeur papier est en matière plastique et la forme adaptée correspond à un triangle adapté pour :
- obtenir un angle inférieur à 40° entre le premier angle de visualisation et la normale à la face supérieure du découpeur papier, délivrant un premier rayon réfracté ;
- obtenir un angle inférieur à 40° entre le premier rayon réfracté et la normale à la face inférieure du découpeur papier, délivrant un second rayon réfracté arrivant sur le papier ;
- obtenir un angle inférieur à 40° entre le deuxième angle de visualisation et la normale à la face supérieure du découpeur papier, délivrant un troisième rayon réfracté ;
- obtenir un angle supérieur à 40° entre le troisième rayon réfracté et la normale à la face inférieure du découpeur papier, délivrant un rayon totalement réfléchi.

Ainsi, selon ce mode de réalisation particulier de l'invention, la forme spécifique du découpeur papier permettant d'obtenir les propriétés optiques souhaitées correspond à un triangle, dont l'angle le plus aigu permet la découpe du papier, et dont les faces supérieure (affleurant à la surface du dispositif électronique) et inférieure (à l'intérieur du dispositif électronique) permettent d'une part la réflexion totale selon l'angle de visualisation du client et d'autre part une réfraction suffisante pour obtenir une visibilité des lignes imprimées sur le ticket selon l'angle de visualisation du commerçant.

Pour une matière plastique, il est connu qu'un rayon arrivant avec un angle inférieur à 40° par rapport à la normale est en partie réfracté, alors qu'un rayon arrivant avec un angle supérieur à 40° par rapport à la normale est totalement réfléchi.

Ainsi, selon ce mode de réalisation de l'invention, la forme triangulaire d'un découpeur en matière plastique permet :
- d'obtenir, pour un angle de visualisation correspondant à celui du commerçant placé face au ticket, une double réfraction à la fois sur la face supérieure et la face inférieure du découpeur papier, pour une visibilité du ticket en cours d'impression, avant qu'il ne sorte de l'imprimante ;
- d'obtenir, pour un angle de visualisation correspondant à celui du client placé face au commerçant, une réflexion totale sur la face inférieure du découpeur (après une réfraction partielle sur la face supérieure), pour une opacité du découpeur empêchant toute visibilité de l'intérieur du dispositif électronique et du papier sous le découpeur. Selon un autre mode de réalisation particulier de l'invention, non revendiqué, le découpeur papier est en matière plastique et un traitement est appliqué à au moins une partie de sa face supérieure et/ou de sa face inférieure pour obtenir ces propriétés optiques.

Ainsi, selon ce mode de réalisation particulier de l'invention, les propriétés optiques souhaitées (à savoir une réflexion totale pour un angle de visualisation correspondant à un client et une transparence du découpeur pour un angle de visualisation correspondant à un commerçant face au ticket en cours d'impression) sont obtenues par l'application d'un traitement spécifique sur au moins une face du découpeur papier, comme par exemple sa face supérieure (c'est-à-dire celle affleurant à la surface du dispositif électronique).

Le traitement peut également être appliqué sur la face inférieure du découpeur papier, ou les deux faces supérieure et inférieure.

Par exemple, le traitement appartient au groupe comprenant :
- une application d'un film polarisant ;
- une déformation de surface.

Ainsi, selon une première variante de ce mode de réalisation, la face supérieure (et/ou la face inférieure) du découpeur papier est recouverte, partiellement ou entièrement, d'un film polarisant permettant d'obtenir les propriétés optiques souhaitées.

Selon une deuxième variante de ce mode de réalisation, la face supérieure (et/ou la face inférieure) du découpeur papier est déformée, partiellement ou entièrement, de façon à présenter des aspérités (par exemple des sortes de petites dents ou des stries) permettant d'obtenir les propriétés optiques souhaitées.

L'invention concerne un dispositif électronique comprenant un découpeur papier tel que décrit précédemment et appartenant au groupe comprenant :
- un terminal de paiement électronique ;
- une caisse enregistreuse électronique.

### 4 LISTE DES FIGURES

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- la figure 1 illustre un découpeur papier selon un premier mode de réalisation de l'invention ;
- la figure 2 illustre un découpeur papier selon un deuxième mode de réalisation de l'invention.

### 5 DESCRIPTION DETAILLEE DE L'INVENTION

### 5.1 Principe général

Les inventeurs confrontés au problème technique d'optimiser, lors de l'utilisation d'un dispositif électronique (du type terminal de paiement électronique ou caisse enregistreuse), la lecture d'un ticket en cours d'impression, avant que le ticket ne sorte du dispositif électronique, sans consommer inutilement du papier en avançant ce dernier ni dégrader la qualité du service offert au client en ralentissant la transaction par exemple, ont d'abord considéré la solution technique consistant à modifier le découpeur papier (ou massicot) de façon à le rendre transparent.

En effet, un découpeur papier transparent permet de lire au moins la dernière ligne imprimée sur le ticket, en sortie de la tête d'impression, sans attendre que la partie imprimée du ticket ne sorte du terminal de paiement électronique (ou de la caisse enregistreuse).

En revanche, cette solution présente l'inconvénient de rendre également visible pour le client (qui se trouve classiquement face au commerçant, à une distance relativement proche du dispositif électronique) le ticket ainsi que l'intérieur du terminal de paiement électronique (ou de la caisse enregistreuse), en particulier les éléments mécaniques de l'imprimante.

Or, la visibilité des pièces techniques n'est, d'une part, pas intéressante pour le client et dégrade l'esthétique du dispositif électronique, et peut, d'autre part, constituer un manque de sécurité selon les éléments techniques rendus visibles par ce découpeur transparent.

Les inventeurs ont donc poursuivi leurs recherches pour améliorer cette solution permettant de résoudre le problème de lecture du ticket imprimé avant qu'il ne sorte du terminal de paiement électronique (ou de la caisse enregistreuse) via un découpeur papier transparent, tout en ne présentant pas l'inconvénient de rendre visible une partie de l'intérieur du terminal de paiement électronique, via ce découpeur papier transparent.

Le principe de l'invention repose donc sur l'utilisation d'un découpeur papier transparent présentant des propriétés optiques permettant, d'une part, une vision optimisée du papier en sortie de l'imprimante pour la personne (par exemple le commerçant) se trouvant face au ticket imprimé et, d'autre part, une invisibilité pour la personne se trouvant de l'autre côté (par exemple le client).

Pour ce faire, les inventeurs se sont donc basés sur des principes optiques connus (réfraction, réflexion) permettant de définir le parcours d'un rayon/faisceau lumineux à travers différents milieux (l'air puis la matière du découpeur papier), en vue d'obtenir les résultats souhaités.

Par exemple, les modes de réalisation de l'invention décrits par la suite sont basés sur un découpeur papier en matière plastique transparente, telle que le polymétachrylate de méthyle (encore appelé PMMA) ou le polycarbonate (encore appelé PC), pour laquelle il est connu :
- qu'un rayon arrivant avec un angle inférieur à 40° par rapport à la normale au support est en partie réfracté et en partie réfléchi, et
- qu'un rayon arrivant avec un angle supérieur à 40° par rapport à la normale au support est totalement réfléchi.

Il est bien entendu que, pour d'autres matières utilisées pour le découpeur papier, comme par exemple le verre qui peut être transparent, ces principes optiques sont différents et mènent à des réalisations différentes du principe de l'invention, non décrites ici mais techniquement réalisables par l'homme du métier. Le choix de la matière utilisée pour le découpeur papier peut par exemple être déterminé selon différents critères comme la facilité d'intégration dans le dispositif électronique (une seule pièce plastique par exemple), la robustesse (résistance à l'usure due aux découpes répétées du papier à l'issue de l'impression de chaque ticket) et les performances de découpage (par exemple en utilisant une matière plastique suffisamment dure).

Par ailleurs, la suite de la description s'attache plus particulièrement à décrire les différents modes de réalisation de l'invention pour un terminal de paiement électronique (notamment pour son utilisation comme caisse enregistreuse), mais il est bien entendu que la solution de l'invention, selon ces différents modes de réalisation, peut s'appliquer à tout dispositif présentant la même problématique, comme par exemple une caisse enregistreuse munie d'une imprimante pour éditer un ticket.

Enfin, les différents modes de réalisation de l'invention sont également basés sur des données considérées comme classiques, ou moyennes, relatives aux positions du commerçant et du client vis-à-vis du dispositif électronique et à la taille moyenne d'une individu.

Ainsi, on considère par la suite que le dispositif électronique (terminal de paiement électronique ou caisse enregistreuse) est posé sur un support et que le client se trouve à une distance d'environ 50 cm du dispositif électronique. De plus, on considère une taille moyenne de 1 mètre 70 pour le client et le commerçant. Ces différentes données d'entrée permettent de couvrir la majorité des situations d'utilisation du dispositif électronique et permettent de considérer des angles de visualisation de référence pour le commerçant (noté ci-après VIS1) et le client (noté ci-après VIS2).

### 5.2 Description d'un premier mode de réalisation

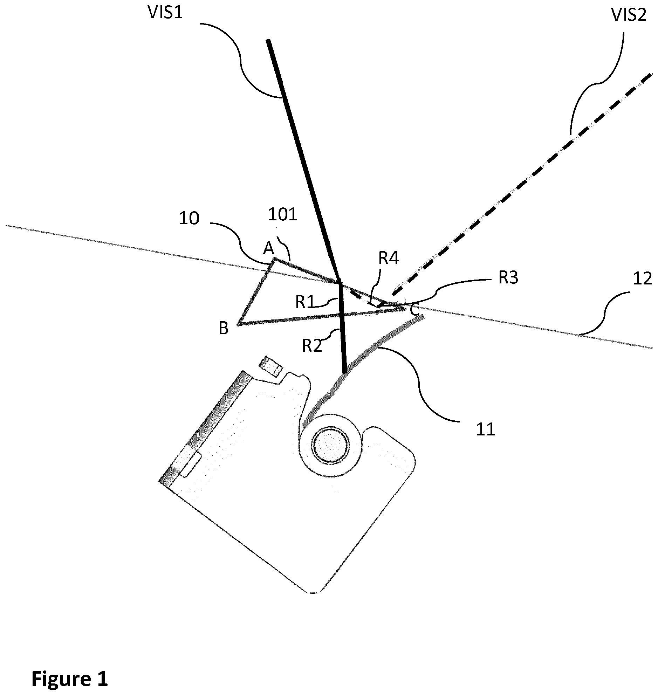

On décrit maintenant, en relation avec la figure 1, un premier mode de réalisation de l'invention, dans lequel la forme du découpeur papier transparent est optimisée afin que l'angle de visualisation du commerçant se trouvant face au ticket permette une vision optimisée de ce dernier en sortie d'imprimante, tout en occultant la visibilité pour le client se trouvant face au commerçant.

Pour ce faire, ce mode de réalisation est donc basé sur la détermination d'une forme spécifique, en triangle, du découpeur papier, afin que certaines conditions relatives aux angles formés par l'œil du commerçant et les différentes faces du découpeur soient respectées pour permettre au commerçant de lire le ticket au travers du découpeur, tout en respectant d'autres conditions relatives aux angles formés par l'œil du client et les différentes faces du découpeur pour empêcher le client de voir au travers du découpeur.

La figure 1 représente donc les angles de visualisation VIS1 et VIS2 respectivement du commerçant et du client, ainsi que le découpeur papier triangulaire 10 et le papier 11, avant qu'il ne sorte du dispositif électronique matérialisé par une surface 12.

Selon ce premier mode de réalisation, les angles A, B et C du découpeur papier 10 sont déterminés de façon à obtenir :
- côté commerçant (VIS1) :
   ∘ un angle inférieur à 40° entre son angle de visualisation (VIS1) et la normale à la face supérieure (AC), pour obtenir un premier rayon réfracté (R1) ;
   ∘ un angle inférieur à 40° entre le premier rayon réfracté R1 et la normale à la face inférieure (CB), pour obtenir un second rayon réfracté (R2) pouvant atteindre le papier, permettant ainsi la lecture du ticket, avant sa sortie du dispositif électronique, par le commerçant ;
- côté client (VIS2) :
   ∘ un angle inférieur à 40° entre son angle de visualisation (VIS2) et la normale à la face supérieure (AC), pour obtenir un troisième rayon réfracté (R3) ;
   ∘ un angle supérieur à 40° entre le troisième rayon réfracté (R3) et la normale à la face inférieure (CB), pour obtenir un rayon réfléchi totalement (R4), rendant ainsi impossible la visibilité au travers du découpeur papier, par le client.

La figure 1 illustre une forme particulière du découpeur papier permettant d'obtenir les résultats souhaités en terme de visibilité ou non selon l'angle de visualisation, tout en tenant compte de l'architecture du dispositif électronique dans lequel sont intégrés l'imprimante et le découpeur papier et en assurant des performances optimales du découpeur papier. Ainsi, le choix des angles du triangle formé par le découpeur papier doit également prévoir un angle C suffisamment aigu pour assurer la fonction de découpe du papier.

Ce premier mode de réalisation de l'invention permet donc d'obtenir le résultat souhaité en terme de visibilité, à travers le découpeur papier, du ticket avant sa sortie par le commerçant, tout en garantissant une opacité du découpeur papier pour le client permettant de ne pas dégrader l'esthétique du dispositif électronique, et en garantissant la robustesse du découpeur papier grâce à une matière choisie suffisamment dure.

### 5.3 Description d'un deuxième mode de réalisation non revendiqué

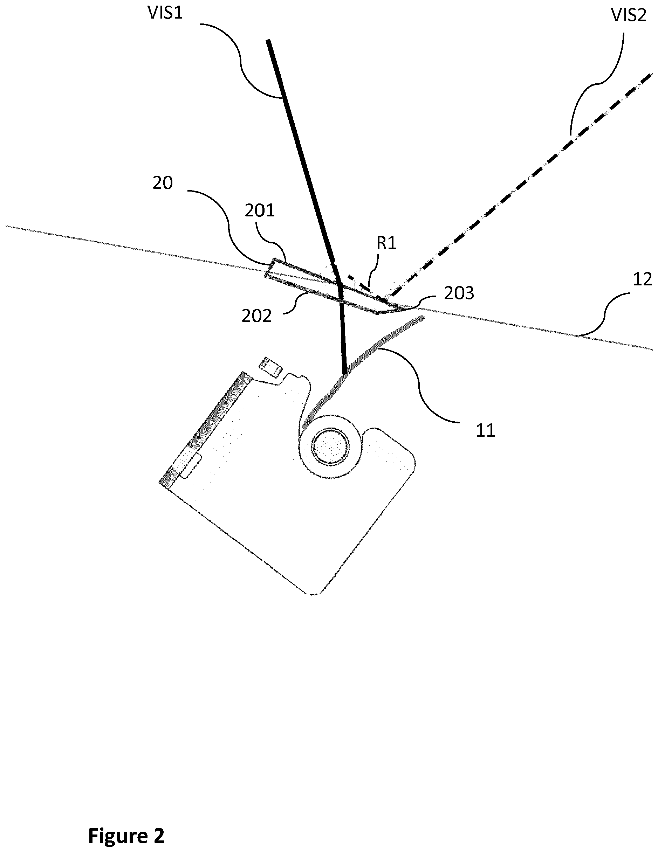

On décrit maintenant, en relation avec la figure 2, un deuxième mode de réalisation de l'invention, dans lequel le découpeur papier transparent a subi un traitement sur au moins une de ses faces afin que, selon l'angle de visualisation du commerçant se trouvant face au ticket, une vision optimisée de ce dernier en sortie d'imprimante soit offerte au commerçant, tout en occultant la visibilité pour le client se trouvant face au commerçant.

La figure 2 représente donc également les angles de visualisation VIS1 et VIS2 respectivement du commerçant et du client, ainsi que le découpeur papier triangulaire 20 et le papier 11, avant qu'il ne sorte du dispositif électronique matérialisé par une surface 12.

Ce deuxième mode de réalisation basé sur l'application d'un traitement sur la face supérieure 201 et/ou la face inférieure 202 d'un découpeur papier 20 permet de concevoir un tel découpeur avec une forme pouvant être proche d'une forme classiquement utilisé pour un découpeur papier (avec la pointe 203 permettant la découpe du papier). En effet, c'est le traitement appliqué sur l'une et/ou l'autre des faces du découpeur qui lui confère ses propriétés optiques, et non sa forme particulière, comme dans le premier mode de réalisation décrit ci-dessus.

Plus particulièrement, la figure 2 illustre une première variante de ce deuxième mode de réalisation dans laquelle seule la face supérieure 201 présente un traitement particulier, par exemple par application d'un film polarisant (connu de l'homme du métier). Ce film polarisant est par ailleurs conçu pour permettre de respecter les conditions de visibilité et non visibilité souhaitées, et permet ainsi :
- d'obtenir au moins une réfraction partielle d'un rayon arrivant sur la face supérieure du découpeur papier selon l'angle de visualisation du commerçant VIS1, de façon à lui permettre de voir, au travers du découpeur, ce qui est imprimé sur le ticket, avant que ce dernier ne sorte du dispositif électronique ;
- d'obtenir une réflexion totale d'un rayon arrivant sur la face supérieure du découpeur papier selon l'angle de visualisation du client VIS2, sous la forme d'un rayon R1, de façon à l'empêcher de voir au travers du découpeur papier.

Une deuxième variante de ce deuxième mode de réalisation, non illustrée, consiste à appliquer un film polarisant à la fois sur la face supérieure 201 et sur la face inférieure 202. Une telle variante peut par exemple être mise en œuvre lorsque des contraintes telles que la forme du découpeur papier, les coûts de fabrication du dispositif électronique ... doivent être prises en compte et ne permettent pas d'obtenir les résultats souhaités par l'application d'un film polarisant sur la seule face supérieure.

Une troisième variante de ce deuxième mode de réalisation, non illustrée, consiste à déformer l'une et/ou l'autre des faces supérieure 201 et 202 du découpeur papier, de façon à leur conférer les propriétés optiques souhaitées. Par exemple, la déformation peut consister à former des stries ou des petites dents, selon un ou plusieurs axes particuliers, dans la matière du découpeur.

Toute autre technique consistant à appliquer un traitement particulier sur l'une et/ou l'autre des faces du découpeur papier peut donc être mise en œuvre pour obtenir les propriétés optiques souhaitées, en fonction de la matière utilisée pour le découpeur papier et des principes optiques précités.

Ce deuxième mode de réalisation de l'invention permet donc également d'obtenir le résultat souhaité en terme de visibilité, à travers le découpeur papier, du ticket avant sa sortie par le commerçant, tout en garantissant une opacité du découpeur papier pour le client permettant de ne pas dégrader l'esthétique du dispositif électronique, et en garantissant la robustesse du découpeur papier grâce à une matière choisie suffisamment dure.

## Revendications

1. Dispositif électronique comprenant un découpeur papier (10) pour une imprimante intégrée audit dispositif électronique, ledit découpeur papier (10) étant transparent et en matière plastique, ledit découpeur papier présentant une forme adaptée conférant audit découpeur papier au moins les propriétés optiques suivantes :
• un rayon arrivant selon un premier angle de visualisation (VIS1) par rapport à au moins une face dudit découpeur papier est au moins en partie réfracté pour arriver sur ledit papier (11) et
• un rayon arrivant selon un deuxième angle de visualisation (VIS2) par rapport à au moins ladite face dudit découpeur papier est totalement réfléchi ;
de sorte que ledit découpeur papier est transparent pour un commerçant placé selon ledit premier angle de visualisation lui permettant de voir au travers dudit découpeur avant qu'un ticket ne sorte dudit dispositif, et ledit découpeur ne permettant pas à un client placé selon ledit deuxième angle de visualisation de voir au travers, lesdites propriétés optiques permettant ainsi de contrôler la transparence du découpeur papier, selon l'angle de visualisation, de façon à permettre la lecture du ticket pour un commerçant tout en occultant la visibilité du ticket et de l'intérieur du dispositif pour un client,
ladite forme adaptée correspondant à un triangle (ABC) tel que :
• l'angle entre ledit premier angle de visualisation (VIS1) et la normale à la face supérieure (AC) dudit découpeur papier (10) est inférieur à 40°, délivrant un premier rayon réfracté (R1) ;
• l'angle entre ledit premier rayon réfracté R1 et la normale à la face inférieure (CB) dudit découpeur papier (10) est inférieur à 40°, délivrant un second rayon réfracté (R2) arrivant sur ledit papier (11) ;
• l'angle entre ledit deuxième angle de visualisation (VIS2) et la normale à la face supérieure (AC) dudit découpeur papier (10), du côté opposé à cette normale (AC) par rapport audit premier angle de visualisation (VIS1), est inférieur à 40°, délivrant un troisième rayon réfracté (R3) ;
• l'angle entre ledit troisième rayon réfracté (R3) et la normale à la face inférieure (CB) dudit découpeur papier (10) est supérieur à 40°, délivrant un rayon totalement réfléchi (R4),
ledit dispositif appartenant au groupe comprenant :
• un terminal de paiement électronique ;
• une caisse enregistreuse électronique.

## Patentansprüche

1. Elektronische Vorrichtung, umfassend einen Papierschneider (10) für einen Drucker, der in die elektronische Vorrichtung integriert ist, wobei der Papierschneider (10) transparent und aus Kunststoff ist, wobei der Papierschneider eine geeignete Form aufweist, die dem Papierschneider mindestens die folgenden optischen Eigenschaften verleiht:
• einen Lichtstrahl, der in einem ersten Betrachtungswinkel (VIS1) in Bezug auf mindestens eine Seite des Papierschneiders ankommt, wird mindestens teilweise gebrochen, um auf das Papier (11) zu treffen, und
• einen Lichtstrahl, der in einem zweiten Betrachtungswinkel (VIS2) in Bezug auf die mindestens eine Seite des Papierschneiders ankommt, wird vollständig reflektiert,
derart, dass der Papierschneider für einen Händler, der in dem ersten Betrachtungswinkel positioniert ist, transparent ist, wodurch er durch den Papierschneider sehen kann, bevor ein Ticket aus der Vorrichtung ausgegeben wird, und wobei der Papierschneider einem Kunden, der in dem zweiten Betrachtungswinkel positioniert ist, nicht ermöglicht, hindurch zu sehen, wobei die optischen Eigenschaften somit ermöglichen, die Transparenz des Papierschneiders entsprechend dem Betrachtungswinkel derart zu steuern, um das Lesen des Tickets für einen Händler zu ermöglichen und dabei gleichzeitig die Sichtbarkeit des Tickets und des Inneren der Vorrichtung für einen Kunden zu verdecken, wobei die angepasste Form einem Dreieck (ABC) derart entspricht:
• dass der Winkel zwischen dem ersten Betrachtungswinkel (VIS1) und der Normalen zur Oberseite (AC) des Papierschneiders (10) kleiner als 40° ist, wodurch ein erster gebrochener Lichtstrahl (R1) abgegeben wird,
• dass der Winkel zwischen dem ersten gebrochenen Lichtstrahl R1 und der Normalen zur Unterseite (CB) des Papierschneiders (10) kleiner als 40° ist, wodurch ein zweiter gebrochener Lichtstrahl (R2) abgegeben wird, der auf das Papier (11) trifft,
• dass der Winkel zwischen dem zweiten Betrachtungswinkel (VIS2) und der Normalen zur Oberseite (AC) des Papierschneiders (10) auf der gegenüberliegenden Seite von dieser Normalen (AC) in Bezug auf den ersten Betrachtungswinkel (VIS1) kleiner als 40° ist, wodurch ein dritter gebrochener Lichtstrahl (R3) abgegeben wird,
• dass der Winkel zwischen dem dritten gebrochenen Lichtstrahl (R3) und der Normalen zur Unterseite (CB) des Papierschneiders (10) größer als 40° ist, wodurch ein vollständig reflektierter Lichtstrahl (R4) abgegeben wird,
wobei die Vorrichtung zur Gruppe gehört, umfassend:
• ein elektronisches Zahlungsterminal,
• eine elektronische Registrierkasse.

## Claims

1. Electronic device comprising a paper cutter (10) for a printer integrated into said electronic device, said paper cutter (10) being transparent and made of plastic, said paper cutter having a shape adapted to obtaining at least some of the following optical properties:
• a ray arriving at a first viewing angle (VIS1) with respect to at least one face of said paper cutter is at least partly refracted to arrive on said paper (11), and
• a ray arriving at a second viewing angle (VIS2) with respect to said at least one face of said paper cutter is totally reflected;
so that said paper cutter is transparent for a merchant placed according to said first viewing angle enabling him to see through the cutter, before the receipt comes out of said electronic device, and said paper cutter preventing a customer placed according to said second viewing angle from seeing through the paper cutter, said optical properties making thus possible to control the transparency of the paper cutter, according to the viewing angle, so as to enable the reading of the receipt for the merchant while concealing the visibility of the receipt and of the interior of the electronic device for the customer,
said adapted shape corresponding to a triangle (ABC) such as:
• the angle between said first viewing angle (VIS1) and the normal to the upper face (AC) of said paper cutter (10) is less than 40°, delivering a first refracted ray (R1);
• the angle between the first refracted ray R1 and the normal to the lower face (CB) of the paper cutter (10) is less than 40°, delivering a second refracted ray (R2) arriving on said paper (11);
• the angle between said second viewing angle (VIS2) and the normal to the upper face (AC) of said paper cutter (10) is less than 40°, delivering a third refracted ray (R3);
• the angle between said third refracted ray (R3) and the normal to the lower face (CB) of said paper cutter (10) is more than 40°, delivering a totally reflected ray (R4),
said electronic device belonging to the group comprising:
• an electronic payment terminal;
• an electronic cash register.
